Europäisches Patentamt

European Patent Office

Office européen des brevets

(11) Publication number: **0 446 811 A1**

# EUROPEAN PATENT APPLICATION

(21) Application number: 91103604.4

(22) Date of filing: 08.03.91

(51) Int. Cl.5: **B28D 5/00**

(30) Priority: 10.03.90 JP 58702/90
22.03.90 JP 72692/90

(43) Date of publication of application:
18.09.91 Bulletin 91/38

(84) Designated Contracting States:
DE FR GB

(71) Applicant: ONODA CEMENT COMPANY, LTD.
6276, Oaza Onoda
Onoda-shi Yamaguchi-ken(JP)

(72) Inventor: Yoshikawa, Masanori, Professor
3-25-16, Maruyamadai, Kounan-ku,
Yokohama-shi, Kanagawa-ken,(JP)

(74) Representative: Dr. Elisabeth Jung Dr. Jürgen
Schirdewahn Dipl.-Ing. Claus Gernhardt
P.O. Box 40 14 68 Clemensstrasse 30
W-8000 München 40(DE)

(54) Method and apparatus for grinding diamond and diamond product using the same.

(57) The invention refers to a method of grinding the surface (1a) of a diamond (1), a respective apparatus and a diamond product. The side surface (4a) of a laser beam (4) is brought into contact with the diamond (1), and the side surface (4a) of the laser beam (4) is relatively moved along the surface (1a) of the diamond (1) while giving thermal energy of the laser beam (4) to the surface (1a) of the diamond (1). The diamond (1) thus ground can be used in a cutting tool and a heat sink.

FIG. I

BACKGROUND OF THE INVENTION

Field of the Invention

The present invention relates to a method and an apparatus for grinding a diamond for use in a cutting tool, a knife, a heat sink and an electronic substrate material and a diamond product using the same.

Description of the Prior Art

Since diamond has excellent hardness, thermal conductivity and electrical insulating characteristics, it is used in a cutting knife, a heat sink and an electronic substrate material. Conventional diamond cutting tools are exemplified by a cutting tool made of a sintered material, a single chip diamond cutting tool and a diamond coating cutting tool manufactured by the CVD method.

However, the above-described conventional tools encounter the following problems:

Since the cutting tool made of a sintered material uses a bonding material, wear resistance and thermal conductivity are unsatisfactory in comparison to the diamond. What is even worse, durability is insufficient. The single chip diamond cutting tool must use a large-size diamond regardless of a fact whether the diamond is a natural diamond or an artificial diamond. Therefore, the overall cost cannot be reduced. Furthermore, the diamond coating cutting tool manufactured by the CVD method suffers from a problem that it cannot satisfactorily adhere to the carbide alloy which serves as a substrate. Therefore, a problem of separating from the substrate will occur at the time of the cutting operation.

It might therefore be considered to employ a method in which a diamond film prepared by a gaseous phase synthetic method is cut to have a predetermined shape to be secured to the cutting tool.

However, since the diamond film prepared by the gaseous phase synthetic method has excessive projections and pits on the surface thereof, machining for flattening/smoothing the surface, that is, grinding must be performed. As the grinding method, a so-called duplicate grinding method using diamond particles has been employed.

Since the conventional method of grinding a diamond has been able to grind the diamond at a low speed of 0.1 $\mu$m/min to 0.1 $\mu$m/h, an excessively long time takes to grind a small chip. Therefore, a cost necessary to grind the diamond becomes too large, causing the cost of a diamond product using the diamond to be raised excessively.

SUMMARY OF THE INVENTION

Accordingly, an object of the present invention is to efficiently grind a diamond. Another object of the present invention is to obtain a cheap diamond product.

The present invention is characterized by grinding the surface of a diamond by relatively moving a laser beam along the surface of the diamond while bringing the side surface of the laser beam into contact with the surface of the diamond.

Other and further objects, features and advantages of the invention will be appear more fully from the following description.

BRIEF DESCRIPTION OF THE DRAWINGS

Figs. 1 and 2 illustrate a first embodiment of the present invention, where Fig. 1 is a front elevational view and Fig. 2 is a plan view;

Figs. 3 to 5 illustrate a second embodiment of the present invention, where Fig. 3 is a front elevational view, Fig. 4 is a plan view and Fig. 5 is a vertical cross sectional view taken along line V-V of Fig. 3;

Figs. 6 and 7 illustrate a third embodiment of the present invention, where Fig. 6 is a front elevational view and Fig. 7 is a front elevational view which illustrates another status of Fig. 6;

Figs. 8 to 11 illustrate a fourth embodiment of the present invention, where Fig. 8 is a front elevational view, Fig. 9 is a plan view, Fig. 10 is a front elevational view which illustrates another status of Fig. 8 and Fig. 11 is a front elevational view which illustrates another status of Fig. 9;

Figs. 12 to 15 illustrate a fifth embodiment of the present invention, where Fig. 12 is a front elevational view, Fig. 13 is a plan view, Fig. 14 is a front elevational view which illustrates another status of Fig. 12 and Fig. 15 is a front elevational view which illustrates another status of Fig. 13;

Figs. 16 to 19 illustrate a sixth embodiment of the present invention, where Fig. 16 is a front elevational view, Figs. 17 and 18 are respectively front elevational views which illustrate another status of Fig. 16 and Fig. 19 is a plan view;

Fig. 20 is a vertical cross sectional view of a seventh embodiment of the present invention;

Figs. 21 and 22 illustrate a ninth embodiment of the present invention, where Fig. 21 is a perspective view of a diamond cutting tool and Fig. 22 is a perspective view of a diamond grinding apparatus;

Fig. 23 illustrates another embodiment of the present invention; and

Fig. 24 is a plan view which illustrates an essential portion of an eigth embodiment of the present invention.

## DETAILED DESCRIPTION OF THE PREFERRED EMBODIMENTS

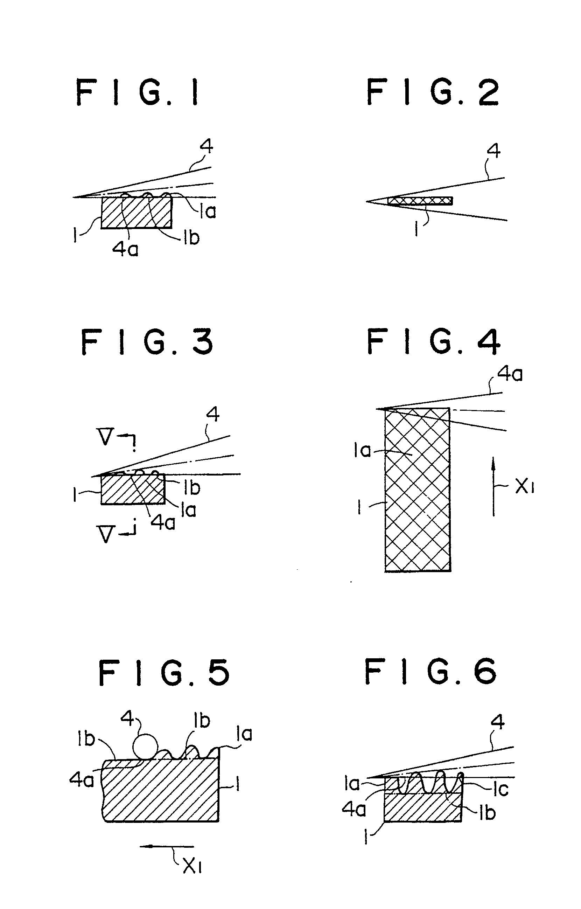

Preferred embodiments of the present invention will now be described. Referring to the drawings, the same reference numerals represent the same elements. A first embodiment of the present invention adapted to a case where a surface to be ground is a small area will be described with reference to Figs. 1, 2 and 23. A diamond 1 is prepared by an arc discharge plasma jet CVD method from methane gas and hydrogen gas, the diamond 1 being then cut to have a predetermined shape by a YAG laser device or the like.

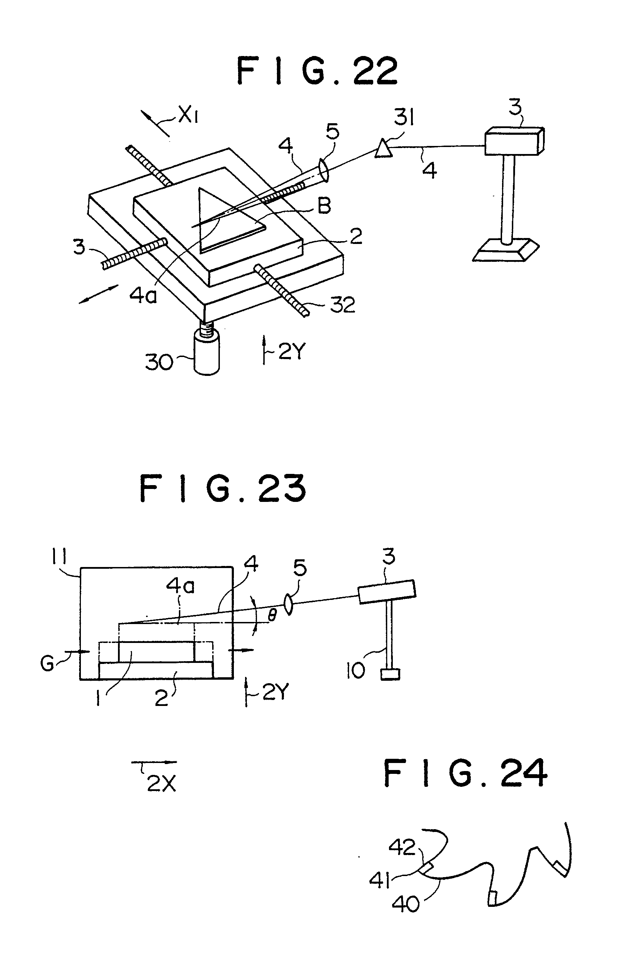

As shown in Fig. 23, a laser beam 4 emitted from a laser generating device, for example, a YAG laser device 3 having a position controlling device 10 is applied to a surface 1a of the diamond 1. At this time, irradiating angle $\theta$ made from an imaginary designed surface, that is, from a ground surface 1b of the diamond 1 formed after grinding has been completed is made to be 15 degrees by operating the position controlling device 10. Furthermore, a side surface 4a of the laser beam 4 is made to be in parallel to the above-described designed ground surface 1b. The irradiating angle $\theta$ may, of course, be changed to a proper angle depending upon the divergent angle and/or the power of the laser beam. The YAG laser device 3 is capable of continuously oscillating to output an average power of 12 W or less and oscillating to output pulses of a peak value output of 23 KW or less. The oscillated laser beam 4 is converged by a lens 5 the focal distance of which is 50 mm. Subsequently, an X-Y table 2 is moved in a direction designated by an arrow 2Y by a vertically-moving means (omitted from illustration) until the surface 1a of the diamond 1 is brought into contact with the side surface 4a of the laser beam 4. In consequence, heat is given from the side surface 4a of the laser beam 4 to the entire surface 1a of the diamond 1 due to the above-described contact between the surface 1a and the side surface 4a of the laser beam 4. As a result, the undesirable projections on the surface 1a of the diamond 1 can be removed so that a flat surface is formed.

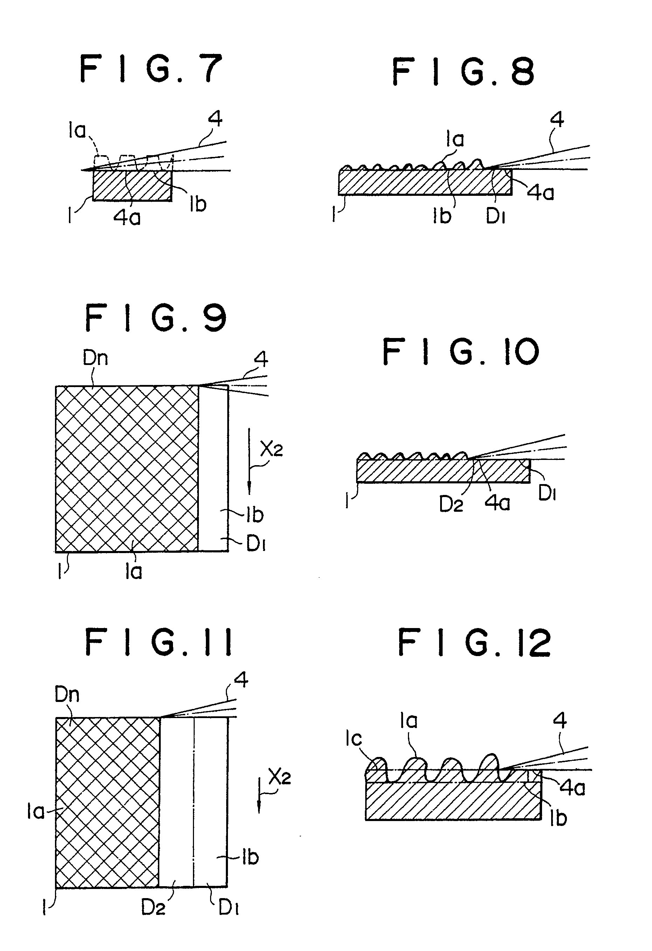

A second embodiment of the present invention adapted to a case where a surface to be ground is in the form of an elongated shape will now be described with reference to Figs. 3 and 4. Similarly to the first embodiment, the side surface 4a of the laser beam 4 is brought into contact with the surface 1a of the diamond 1. Subsequently, the table 2 is moved in a direction designated by an arrow X1, that is, in an lengthwise direction of the diamond 1. Consequently, the surface 1a absorbs heat from the side surface 4a of the laser beam 4 so that projections on the surface 1a are removed as shown in Fig. 5. As a result, a smooth ground surface is formed. The ground surface thus obtained is, of course, the same as the above-described designed ground surface 1b.

A third embodiment of the present invention adapted to a case where a subject of grinding has a rough surface will now be described with reference to Figs. 6 and 7. Similarly to the second embodiment, first grinding is performed so that a first ground surface 1C is formed. Then, the table 2 is moved in a direction designated by an arrow 2Y by a predetermined quantity, for example, 30 $\mu$m so that the side surface 4a of the laser beam 4 is brought into contact with the first ground surface 1C.

Subsequently, the table 2 is, as shown in Fig. 4, moved in a direction designated by an arrow X1 so as to perform second grinding so that the designed ground surface 1b is made to be the surface. If the surface to be ground has not been satisfactorily flattened, the above-described operation is repeated several times so as to make the designed ground surface 1b to be the surface.

A fourth embodiment of the present invention adapted to a case where a surface to be ground has a large area will now be described with reference to Figs. 8 to 11. Similarly to the second embodiment, the table 2 is moved in a direction designated by an arrow 2X by a predetermined distance, for example, 300 $\mu$m after first sectioned surface $D_1$ has been ground. In consequence, the side surface 4a of the laser beam is brought into contact with second sectioned surface $D_2$. Subsequently, the table 2 is moved in a direction designated by an arrow X2 so that the second sectioned surface $D_2$ is ground. Sectioned surfaces $D_1$ to $D_N$ are ground by repeating the above-described processes so that the entire surface 1a of the diamond is made to be the designed ground surface 1b.

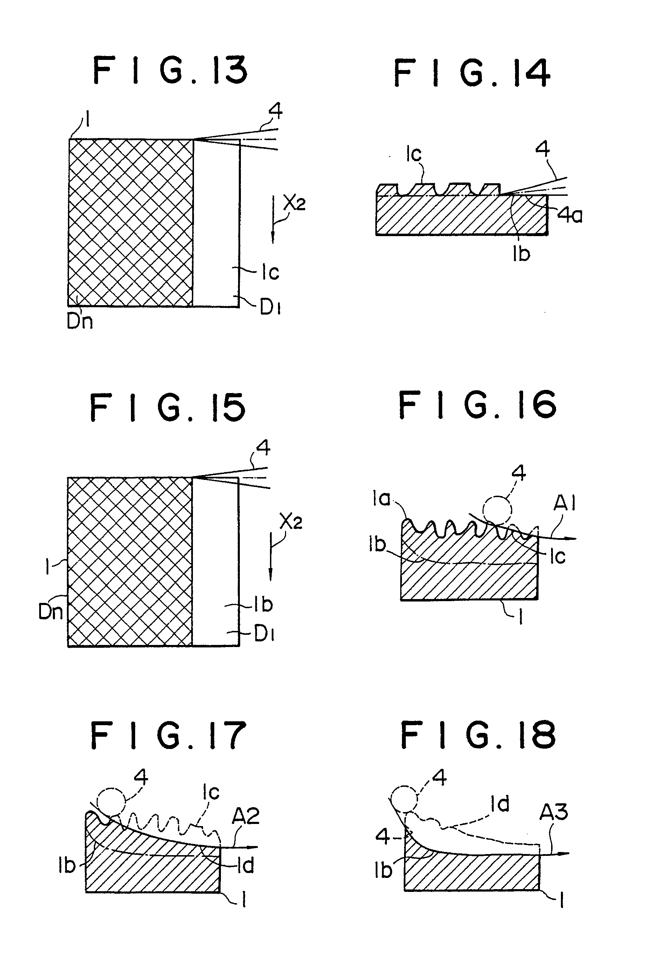

A fifth embodiment of the present invention adapted to a case where the subject of grounding according to the fourth embodiment has a rough surface will now be described with reference to Figs. 12 to 15. Similarly to the fourth embodiment, the first grinding is performed so that the first ground surface is formed. Then, the table 2 is moved in a direction designated by an arrow Y by a predetermined quantity, for example, 30 $\mu$m. As a result, the side surface 4a of the laser beam is brought into contact with the first ground surface before the table 2 is moved in a direction designated by an arrow X2. Then, the sectioned surfaces $D_1$ to $D_N$ are, similarly to the process performed in the fourth embodiment, ground so that the entire surface 1a of the diamond is made to be the designed ground surface 1b.

A sixth embodiment of the present invention adapted to a case where the designed ground surface is a curved surface will now be described with reference to Figs. 16 to 19. The side surface 4a of the laser beam 4 is brought into contact with the square surface 1a of the diamond 1. Subsequently, the position controlling device 10 of the YAG laser device 3 is operated so as to move the side surface 4a of the laser beam in a direction designated by an arrow A1. As a result, the locus of the moved side surface 4a is made to be in the form of a curved surface. Therefore, the surface 1a of the diamond 1 is ground along the above-described locus so that a first ground surface 1C is formed. Then, the position controlling device 10 of the YAG laser device 3 is again controlled so as to bring the side surface 4a of the laser beam into contact with the above-described first ground surface 1C. Subsequently, the side surface 4a is moved in a direction designated by an arrow A2 so that the locus of the moved side surface 4a is made to be in the form of a curved surface. As a result, a second ground surface 1d is, as shown in Fig. 17, formed along the above-described locus. Then, the position controlling device 10 of the YAG laser device 3 is again controlled so as to bring the side surface 4a of the laser beam into contact with the second ground surface 1d. Then, the side surface 4a is moved in a direction designated by an arrow A3 so that the locus of the moved side surface 4a is made to be in the form of a curved surface. As a result, the designed ground surface 1b is formed along the above-described locus.

Although the second to the fifth embodiments are arranged in such a manner that the YAG laser device 3 is fixed and the table 2 is moved so as to grind the diamond 1 while moving the diamond 1, a method contrary to this may be employed, that is, the YAG laser device 3 is moved and the diamond 1 and the table 2 are fixed.

Furthermore, another arrangement may be employed in which the diamond is ground as described above and it is further ground by a conventional "duplicate grinding method". In this case, the time necessary to grind the diamond can be shortened and a further smooth ground surface can be formed. In addition, another arrangement may be employed in which the diamond 1 placed on the table 2 is introduced into a chamber 1 before the inside of the chamber 1 is made vacuous. As an alternative to this, the diamond may be ground while supplying atmospheric gas G such as oxygen, air or argon into the chamber 11.

The diamond cut by any of the grinding methods according to the present invention can be used as a cutting tool, a milling cutter, a surface cutter, a knife, a heat sink and an electronic substrate material.

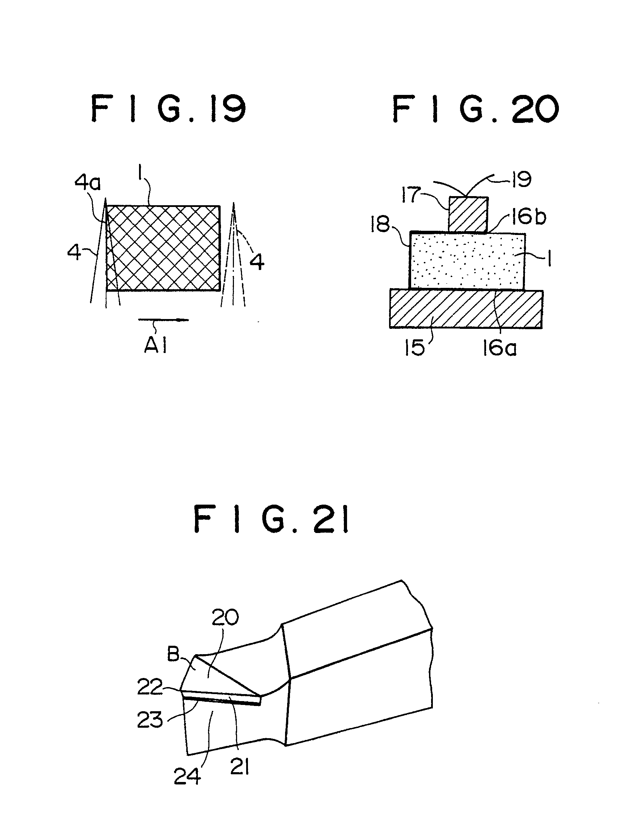

Fig. 20 illustrates a seventh embodiment of the present invention in which the ground diamond is used in a rectangular heat sink 20. The lower surface of the diamond 1 of the heat sink 20 is secured to a copper member 15 via an adhesive layer 16a, while the upper surface of the same is secured to a heat generating source 17 via another adhesive layer 16b. Referring to Fig. 20, reference numeral 18 represents an adhesive line and 19 represents a contact.

An eigth embodiment shown in Fig. 24 illustrates a case where a diamond ground by the above-described method and the device is used in a milling cutter. Ground diamond chips 42 are secured to the front portions 41 of the cutter blades 40.

A ninth embodiment of the present invention in which a diamond ground by a diamond grinding device is used in a cutter will now be described with reference to Figs. 21 and 22. A diamond thin plate B having a thickness of 300 $\mu$m is made by an arc discharge plasma jet CVD method. The thin plate B is placed on the table 2, the thin plate B being then absorbed by a pipe P so that it is secured onto the table 2. Subsequently, a Y-axis ball screw 30 is rotated so that the table 2 is moved in a direction designated by an arrow 2Y. Furthermore, a prism (irradiating-angle adjustment means) 31 is adjusted so as to make the irradiating angle $\theta$ of the laser beam to be 15 degrees from the designed ground surface. In addition, the side surface 4a of the laser beam is brought into contact with the surface of the diamond. While applying the laser beam with the focal distance of the laser beam changed, an X-axis ball screw 32 is rotated so that the table 2 is moved in a direction designated by an arrow X1 and thereby the diamond thin plate B is moved perpendicular to the direction of the applied laser beam and in parallel to the surface. At this time, the side surface 4a of the laser beam 4 and the designed ground surface are adjusted so as to always come in contact with each other by a vertical adjustment means (omitted from illustration). As a result, the surface of the diamond B is made to be the designed ground surface. In consequence, a smooth rake face is formed. Subsequently, the X-axis screws 32, 33 and the Y-axis ball screw 30 are rotated so that the position of the table 2 is adjusted. Furthermore, the angle of a prism 31 is adjusted so that the laser beam 4 is applied perpendicularly to the surface of the diamond. As a result, the diamond is cut while making an angle of 7 degrees from the vertical plane. The diamond is cut by the laser beam applied several times so as to make the point angle and the frank angle to respectively be predetermined angles while maintaining a focal distance and

adjusting the perpendicularity of the laser beam by utilizing the above-described characteristics.

Furthermore, the cut surface is made to be a flank 21. After the diamond thin plate (cutter chip) B has been cut, it is soldered 23 with an Ag-Cu-Ti alloy or the like to a support frame 24 made of a carbide metal. In consequence, a cutting tool is manufactured. A precise cutting machine to which the thus manufactured cutting tool B was fastened was subjected to a cutting test in which an aluminum alloy was cut. As a result, the soldered portion 23 was not separated and the edge of the blade was not broken. The reason for this can be considered that the thickness of the diamond is made considerably large in comparison to the thickness of the soldered portion 23 and thereby an information of deformation of the soldered portion, which takes place at the time of cutting the aluminum alloy, can be satisfactorily eliminated. Furthermore, the grain boundary of the diamond is strongly bonded. Therefore, the edge of the blade cannot be easily broken. Furthermore, both the rake face 20 and the frank face 21 of the blade edge 22 did not encounter a problem of wear.

Although the supporting frame 24 was made of a carbide alloy according to the above-described embodiment, the present invention is not limited to this. For example, the supporting frame 24 may be made of another metal. Furthermore, the gaseous synthetic diamond may be manufactured by a multiple-torch type plasma generating device, disclosed in Japanese Patent Laid-Open No. 2-248397 in place of the above-described CVD method.

Although the invention has been described in its preferred form with a certain degree of particularly, it is understood that the present disclosure of the preferred form has been changed in the details of construction and the combination and arrangement of parts may be resorted to without departing from the spirit and the scope of the invention as hereinafter claimed.

## Claims

1. A method of grinding a diamond comprising a step of bringing the side surface (4a) of a laser beam (4) to the surface (1a) of the diamond (1).

2. A method of grinding a diamond according to Claim 1, wherein the irradiating angle of said laser beam (4) is 15 degrees from an imaginary designed surface.

3. A method of grinding a diamond according to Claim 1, wherein said laser beam (4) is generated by a YAG laser device (3).

4. A method of grinding a diamond comprising a step of bringing the side surface (4a) of a laser beam (4) to the surface of the diamond (1) in an atmosphere.

5. A method of grinding a diamond according to Claim 4, wherein said atmosphere is an oxygen atmosphere.

6. A method of grinding a diamond according to Claim 5, wherein said atmosphere is an air atmosphere.

7. A method of grinding a diamond according to Claim 5, wherein said atmosphere is an argon atmosphere.

8. A method of grinding a diamond according to Claim 5, wherein said atmosphere is a vacuum atmosphere.

9. A method of grinding a diamond comprising a step of relatively moving the side surface (4a) of a laser beam (4) along a designed ground surface while bringing said side surface (4a) of said laser beam (4) into contact with the diamond (1).

10. A method of grinding a diamond according to Claim 9, wherein said designed ground surface is a plane.

11. A method of grinding a diamond according to Claim 9, wherein said designed ground surface is a curbed surface.

12. A method of grinding a diamond comprising:
    a first grinding process in which the side surface of a laser beam is relatively moved along a designed ground surface while bringing said side surface (4a) of said laser beam (4) into contact with the diamond (1); and
    a second grinding process in which said side surface (4a) of said laser beam (4) is moved in a direction of the thickness of the diamond (1) so as to be brought into contact with a surface to be ground, and said side surface (4a) of said laser beam (4) is relatively moved along said designed ground surface.

13. A method of grinding a diamond according to Claim 12, wherein said second grinding process is repeated a plurality of times.

14. A method of grinding a diamond comprising:
    a first sectional grinding process in which the side surface (4a) of a laser beam (4) is relatively moved along a designed ground surface while bringing said side surface (4a) of said laser beam (4) into contact with the diamond (1); and

a second sectional grinding process in which said side surface (4a) of said laser beam (4) is horizontally moved so as to be brought into contact with a residual surface and said side surface (4a) is relatively moved along a designed ground surface.

15. A method of grinding a diamond according to Claim 14, wherein said second sectionary grinding process is repeated a plurality of times.

16. A method of grinding a diamond comprising:

a first ground surface forming process including

a grinding process in which the side surface (4a) of a laser beam (4) is relatively moved along a designed ground surface while bringing said side surface (4a) of said laser beam (4) into contact with the diamond (1), and

a grinding process in which said side surface (4a) of said laser beam (4) is horizontally moved so as to be brought into contact with a residual surface and said side surface (4a) is relatively moved along a designed ground surface; and

a second ground surface forming process including

a grinding process in which said side surface (4a) of said laser beam (4) is moved in a direction of the thickness of the diamond (1) so as to be brought into contact with said first ground surface (1C) and said side surface is relatively moved along said designed ground surface, and

a grinding process in which said side surface (4a) of said laser beam (4) is horizontally moved so as to be brought into contact with a residual surface and said side surface (4a) is relatively moved along a designed ground surface.

17. A method of grinding a diamond according to Claim 16, wherein said second grinding surface forming process is repeated a plurality of times.

18. A method of grinding a diamond comprising:

a temporary grinding process in which the side surface (4a) of a laser beam (4) is relatively moving said side surface (4a) in a circular arc manner while bringing said side surface (4a) of said laser beam (4) into contact with the surface (1a) of the diamond (1); and

a main grinding process in which said side surface (4a) of said laser beam (4) is moved in a direction of the thickness of the diamond (1) so as to be brought into contact with a surface to be ground, and said side surface (4a) is relatively moved in a circular arc manner.

19. A method of grinding a diamond according to Claim 18, wherein said main grinding process is repeated a plurality of times.

20. An apparatus for grinding a diamond comprising:

a device (3) for generating a laser beam (4) to be applied to the surface of the diamond (1);

a diamond fixing table (2) which can be relatively displaced in a substantially perpendicular direction to a direction of the axis of said laser beam (4); and

means (31) for adjusting the irradiating angle of said laser beam (4).

21. An apparatus for grinding a diamond comprising:

a device (3) for generating a laser beam (4) to be applied to the surface of the diamond (1);

a diamond fixing table (2) which can be relatively displaced in a substantially perpendicular direction to a direction of the axis of said laser beam (4);

means (31) for adjusting the irradiating angle of said laser beam (4); and

means for relatively adjusting the vertical positional relationship between said laser beam (4) and said table (2).

22. A diamond product comprising:

a diamond manufactured by relatively moving the side surface (4a) of a laser beam (4) along the surface (1a) of said diamond (1) while bringing said side surface (4a) of said laser beam (4) into contact with said surface (1a) of said diamond (1); and

a cutting tool which employs said ground diamond (1).

23. A diamond product comprising:

a diamond (1) manufactured by relatively moving the side surface (4a) of a laser beam (4) along the surface (1a) of said diamond (1) while bringing said side surface (4a) of said laser beam (4) into contact with said surface (1a) of said diamond (1); and

a heat sink which employs said ground diamond (1).

24. A diamond product according to Claim 22, wherein said cutting tool is a cutting blade.

25. A diamond product according to Claim 22, wherein said cutting tool is a milling cutter.

26. A diamond product according to Claim 24, wherein diamond chips of said cutting blade are soldered to a carbide alloy.

27. A diamond product according to Claim 24, wherein each of diamond chips of said cutting blade respectively has a rake face and a frank face.

# F I G. I

# F I G. 2

# F I G. 3

# F I G. 4

# F I G. 5

# F I G. 6

# F I G. 7

# F I G. 8

# F I G. 9

# F I G. 10

# F I G. 11

# F I G. 12

9

# F I G. 13

# F I G. 14

# F I G. 15

# F I G. 16

# F I G. 17

# F I G. 18

# F I G. 19

4a
I
4
4
A1

# F I G. 20

19
17
18
16b
I
15
16a

# F I G. 21

20
B
22
23
24
21

# F I G. 22

# F I G. 23

# F I G. 24

## EUROPEAN SEARCH REPORT

### DOCUMENTS CONSIDERED TO BE RELEVANT

EP 91103604.4

| Category | Citation of document with indication, where appropriate, of relevant passages | Relevant to claim | CLASSIFICATION OF THE APPLICATION (Int. Cl.5) |
|---|---|---|---|
| Y | CH - A - 640 448 (LASAG) <br> * Fig. 3b * | 1,4,6, 11 | B 28 D 5/00 |
| Y | US - A - 3 527 198 (TAKAOKA) <br> * Abstract * | 1,4,6, 11 | |
| A | FR - A - 2 408 423 (KOYO) <br> * Fig. 1 * | 1,9 | |
| A | US - A - 4 625 093 (CHRYSSOLOURIS) <br> * Fig. 7,9 * | 1,9, 10,13 | |
| A | US - A - 4 327 275 (ASABA) <br> * Column 5, line 63; fig. 7, 8 * | 1,9,10 | |
| A | US - A - 2 537 165 (SMITH) <br> * Column 6, lines 63-71; fig. 11 * | | TECHNICAL FIELDS SEARCHED (Int. Cl.5) <br><br> B 23 K <br> B 24 B <br> B 28 D <br> C 04 B |

The present search report has been drawn up for all claims

| Place of search | Date of completion of the search | Examiner |
|---|---|---|
| VIENNA | 14-06-1991 | GLAUNACH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)